# EUROPÄISCHE PATENTANMELDUNG

(11) **EP 0 699 394 A1**
(43) Veröffentlichungstag der Anmeldung: **06.03.1996**
(21) Anmeldenummer: 95110121.1
(22) Anmeldetag: 29.06.1995
(51) Int. Cl.: A23L 1/216, A23L 3/375, A23B 7/148

(54) **Verfahren und Vorrichtung zum Herstellen von gefrosteten Kartoffelhalbfabrikaten aus Kartoffelreibselmassen**

(30) Priorität: 08.07.1994 DE 4424100
(71) Anmelder: Buse Gase GmbH & Co., D-53557 Bad Hönningen (DE)
(72) Erfinder: Ullrich, Lothar, D-65239 Hochheim am Main (DE)
(74) Vertreter: Berdux, Klaus, Dipl.-Ing.

(57) **Zusammenfassung**

Die Erfindung betrifft ein zeit- und energiesparendes Verfahren und eine Vorrichtung zum Herstellen von rohen, tiefkühlfähigen Kartoffelhalbfabrikaten aus Kartoffelreibselmassen. Das Verfahren besteht darin, daß die Reibselmasse schnell abgekühlt wird, wobei eine feste Konsistenz geschaffen und ein Süßwerden des Kartoffelproduktes verhindert wird. Ein Vorbacken oder Vorkochen der Masse ist daher nicht erforderlich. Als Kühlmittel wird flüssiger Stickstoff oder Kohlendioxid bevorzugt.

## Beschreibung

Die Erfindung betrifft ein Verfahren und eine Vorrichtung zur Herstellung von gefrosteten Kartoffelhalbfabrikaten aus Kartoffelreibselmassen nach dem Oberbegriff des Anspruchs 1.

Kartoffelreibselmassen, die für die Tiefkühlung zubereitet werden, werden bisher so hergestellt, daß man aus Kartoffeln nach bekannten Methoden eine Reibselmasse herstellt, diese mit entsprechenden Gewürzen und sonstigen Zutaten verfeinert, die so hergestellte Masse vorbackt, um eine festere Konsistenz zu erhalten und tiefgefroren verpackt. Derartige Verfahren sind beispielsweise in der DE-OS 25 32 652 beschrieben.

Diese Herstellungsverfahren sind zeitaufwendig und erfordern durch das Backen der Masse erheblichen Energieaufwand.

Der Erfindung liegt daher die Aufgabe zugrunde, ein Verfahren und eine Vorrichtung zum Herstellen von tiefkühlfähigen Kartoffelreibselmassen zu schaffen, das den Zeit- und Energieaufwand während der Produktion und somit den Kostenaufwand vermindert.

Ausgehend von dem im Oberbegriff des Anspruches 1 berücksichtigten Stand der Technik ist die Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

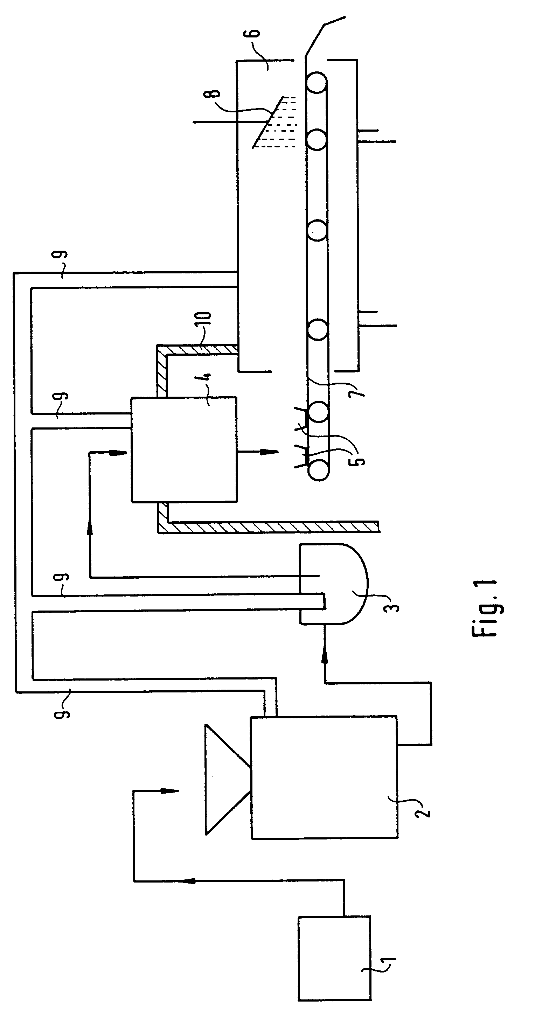

Ein Ausführungsbeispiel der Erfindung ist in der Zeichnung schematisch dargestellt und wird im folgenden näher beschrieben.

Die Zeichnung zeigt eine Vorrichtung bei der die in einer Kartoffelvorbehandlungsvorrichtung 1 gewaschenen und geschälten Kartoffeln zum Reiben in eine Raspelvorrichtung 2 eingetragen werden. In einem Mischer 3 werden die Gewürze und andere Hilfsstoffe, beispielsweise Ascorbinsäure zum Verhindern des Braunwerdens, untergemengt. Die rohe Masse wird durch einen Portionierer 4 offenen Formschälchen 5 zugegeben, die einem Froster 6 zugeführt werden. Im Froster 6 werden die in den offenen Schälchen 5 vorgeformten Reibselmassen auf einem Transportband 7 einem Sprührohr 8 für flüssigen Stickstoff zugeführt. Der flüssige Stickstoff bewirkt eine rasche Abkühlung der Reibselmasse und verdampft. Der dabei entstehende Kaltgasstrom aus Stickstoff wird zur Vorkühlung und Inertisierung dem Gesamtprozeß zugeführt. Um eine Inertisierung des Gesamtprozesses zu erreichen, werden von dem Froster 6 Gasleitungen 9 abgeführt, die das Inertgas vom Froster der Raspelvorrichtung 2, dem Mischer 3 und dem Portionierer 4 zuleiten. Zur Aufrechterhaltung der Inertgasatmosphäre beim Portionieren befindet sich über dem Portionierer 4 eine Haube 10, die bis an den Froster 6 heranreicht.

Zur Vereinfachung des Herstellungsprozesses gegenüber dem Stand der Technik werden nun aus geeigneten Kartoffelsorten - vorwiegend gelbfleischig und mit mittleren stärkegehalten von 12-17 % - Kartoffelreibsel hergestellt. Diese Reibselmasse wird mit Gewürzen und sonstigen Zutaten verfeinert, in rohem Zustand in offene Formen dosiert, in einem schnellen Abkühlprozeß gefrohren, entformt und verpackt. Die Abkühlung erfolgt dabei derart, daß sich je nach zu verarbeitender Kartoffelsorte eine Kerntemperatur von mindestens -3°C einstellt. Vorzugsweise wird beim Abkühlen ein kryogenes Gas wie flüssiger Stickstoff auf das zu gefrierende Produkt aufgesprüht. Hiermit wird ein schnelles Gefrieren gewährleistet. Die Reibselmasse bleibt somit gebunden und erhält eine feste Konsistenz. Ein Süßwerden der Reibselmasse wird verhindert. Alternativ können auch andere kalte Gase, z.B. CO₂ und Luft verwendet werden. Die rohe Reibselmasse kann in portionsgerechte Einheiten eingefüllt, mit einer Deckelfolie versiegelt und anschließend gefrostet und verkaufsfertig verpackt werden. Die so hergestellten Produkte werden - entsprechend den Richtlinien für Tiefkühlprodukte - bei -18°C gelagert.

## Patentansprüche

1. Verfahren zur Herstellung von gefrosteten Kartoffelhalbfabrikaten aus Kartoffelreibselmassen für Tiefkühlprodukte, bei dem rohe, geschälte Kartoffeln gerieben, gewürzt und geformt werden, dadurch gekennzeichnet,
daß die Reibselmasse schnell abgekühlt und für die Lagerung unter Tiefkühlung verpackt wird.

2. Verfahren nach Anspruch 1,
dadurch gekennzeichnet,
daß die Reibselmasse vor dem schnellen Abkühlen mit Hilfsstoffen versetzt wird.

3. Verfahren nach Anspruch 1 oder 2,
dadurch gekennzeichnet,
daß die Abkühlung durch Beaufschlagen der Kartoffelreibselmasse mit einem Kühlmittel erfolgt.

4. Verfahren nach Anspruch 1 oder 2,
dadurch gekennzeichnet,
daß die Beaufschlagung mit flüssigem Stickstoff erfolgt.

5. Verfahren nach Anspruch 1 oder 2,
dadurch gekennzeichnet,
daß die Beaufschlagung mit CO₂ erfolgt.

6. Verfahren nach Anspruch 4 oder 5,
dadurch gekennzeichnet,
daß das aus dem Gefrierprozeß abgeführte Kaltgas zur Inertisierung dem Gesamtprozeß zugeführt wird.

7. Vorrichtung zur Durchführung des Verfahrens nach den Ansprüchen 4 oder 5, im wesentlichen bestehend aus einer Raspelvorrichtung (2), einem Mischer (3), einem Portionierer (4) und einem Froster (6), dadurch gekennzeichnet,
daß die Raspelvorrichtung, der Mischer und der Portionierer zur Einleitung von Inertgas aus dem Froster durch eine Inertgaszuführung (9) mit dem Froster verbunden ist.
